# EUROPEAN PATENT APPLICATION

(11) **EP 1 916 229 A2**
(43) Date of publication of application: **30.04.2008**
(21) Application number: 07117204.3
(22) Date of filing: 25.09.2007
(51) Int. Cl.: C04B 41/48

(54) **Process for finishing stony material slabs or blocks and plant for carrying out such process**

(30) Priority: 03.10.2006 IT VR20060151
(71) Applicant: Aros S.r.l., 37010 Affi (VR) (IT)
(72) Inventor: Fioratti, Stefano, 25015 - Desenzano - Verona (IT)
(74) Representative: Reniero, Cirillo Silvano

(57) **Abstract**

The present invention relates to a process for finishing porous, stony material slabs or blocks, comprising the following sequential steps:
- prearranging a stony material slab or block (1) to be treated, having a noble surface (1a) and an opposite surface thereto (1 b);
- placing at least one hardenable fluid resinous coating material in contact with at least the noble surface (1a) of said slab.

The process further comprises a step of arranging said slab or block (1) in a controlled pressure environment, thereby creating a predetermined pressure at at least one of said noble (1a) and opposite (1b) surfaces of said slab or block (1) to cause a controlled, forced penetration of said at least one resinous material into the pores of said slab or block at at least said noble surface (1a).

## Description

The present invention regards a process for finishing, by means of resining, slabs or blocks of stony material or the like, in particular porous stony material such as travertine, breccia, porous or locally "disjointed" pudding stone, tuffs (such as Lazio peperino stone) and biocalcarenites (Vicenza stone), as well as a plant for carrying out the same.

The slabs and blocks of porous stony material intended to be used for example for flooring or wall covering must almost always be treated before the final polishing in order to eliminate any surface defects by filling the cavities and pores, also with the goal of conferring a uniform, pleasant external aspect to the slabs themselves.

It has thus been proposed to make the surface finishing of slabs and blocks of porous stony material by means of a resining process, preferably carried out by employing polyester resin, of the "noble" surface of the slab or block, i.e. that which, in use, is intended to remain in sight, before the polishing process.

Such process generally provides for the following sequential steps:
- prearranging a stony material slab or block;
- pre-dressing the noble surface of the slab by means of abrasive grindstones of 46, 60 or 120 grain size;
- covering the rear, non-dressed surface of the slab (i.e. that not intended to remain in view during use) with liquid white cement or with a stucco, possibly added with suitable quantities of iron oxides to confer a "color" to the cement similar to that of the stony material being worked;
- allowing the slab covered with cement or stucco to rest until complete hardening of the cement or stucco is attained, possibly accelerating such hardening process with the previous addition of catalysts to the cement or by means of application, also local application, of heat (raising the temperature);
- heating the slab thus covered in an oven at approximately 30°-40°C for about an hour in order to eliminate the moisture present in the slab pores;
- covering the noble, pre-dressed surface of the slab, e. g. by casting, with a liquid transparent (polyester) resin;
- heating the slab once again in an oven to a temperature of about 20-30°C for a 2 to 24 hour time interval, in order to carry out the polymerization of the resin;
- finishing the noble surface of the slab, e. g. by means of machine dressing, thus eliminating the excess resin from the surface of the slab and obtaining a uniformly flat surface;
- filling the pores which have possibly remained open, e. g. by employing polyester putty which can be polymerized upon exposure to UV rays, cement or stucco; and
- polishing the noble surface of the slab.

Such a process, if on one hand it permits obtaining a slab with a good surface finishing, on the other involves high resin consumption and long times for carrying out the entire finishing operation of the slab or block.

The step which provides for covering the pre-dressed noble surface of the slab with a liquid transparent polyester resin must in fact be repeated 3 or 4 times in order to ensure filling the entire volume of the pores. Moreover, between applications of the resin it is necessary to interrupt the entire process to give time for the resin to fully penetrate into the pores, since the latter can constitute access openings to inner cavities, even quite large cavities, which must be filled with resin. It is therefore not possible to apply all of the resin in a single step, since in this case the resin would accumulate at the surface and would harden without having time to suitably penetrate into the slab or block.

Resin is not applied to the slab with the main goal of reinforcing the slab's structure, but is done so predominantly for aesthetic reasons, attainable by eliminating surface roughness. A process like that above involves the use of a lot of resin, intended to fill the pores and the inner cavities of the piece being worked in order to create a "base" for the resin amount which comes to cover the pre-dressed noble surface.

The main object, then, of the present invention is that of providing a process for finishing slabs or blocks of porous stony material which can be carried out by means of use of a limited amount of covering resin, much less than that required in the treatment processes according to the prior art.

Another object of the present invention is that of providing a process for finishing slabs in porous stony material which is easy and requires achievement times which are 1:4 reduced with respect to those necessary up to now.

Another object of the present invention is that of providing a process for finishing slabs in porous stony material which allows considerable savings, both in material and equipment, with respect to the processes proposed up to now.

Another object of the present invention is that of providing a plant for carrying out a process according to the present invention with high efficiency and which does not require great investments.

These and still other objects, which will better appear below, are attained by a process for finishing slabs or blocks of porous stony material, comprising the following steps in sequence:
- prearranging a slab or block of stony material to be treated having a noble surface and an opposite surface thereto;
- placing at least one hardenable fluid resinous coating or cover material in contact with at least the noble surface of the slab; and
   further comprising the steps of arranging the slab or block in a controlled pressure environment, thus creating a predetermined pressure at at least one between the noble and opposite surfaces of the slab or block thereby causing a controlled, forced penetration of the at least one resinous material into the pores of the slab or block at at least the noble surface.

Further aspects and advantages of the present invention will better appear from the following detailed description of specific embodiments of a process for finishing slabs or blocks of stony material and a plant for carrying out the same, description made with reference to the accompanying drawings, in which:

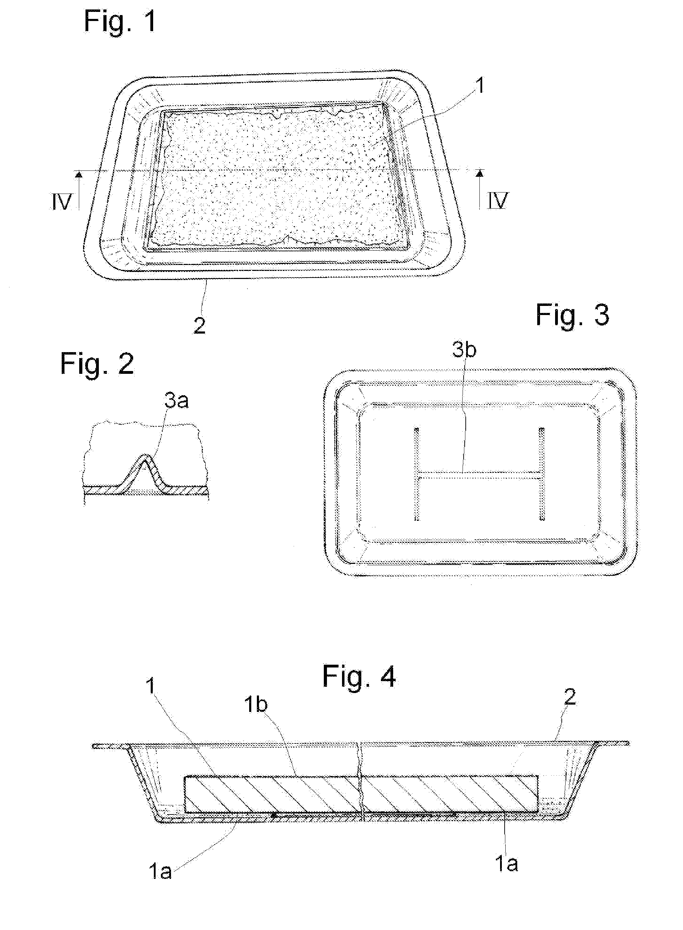

Figure 1 illustrates a slab or block of stony material arranged in a tub container in contact with a resinous material;
Figure 2 illustrates a detail in cross-section of the tub container of Fig. 1;
Figure 3 is a top view of the tub container of Fig. 1, empty;
Figure 4 is a side, longitudinal section view taken along the line IV-IV of Fig. 1; and

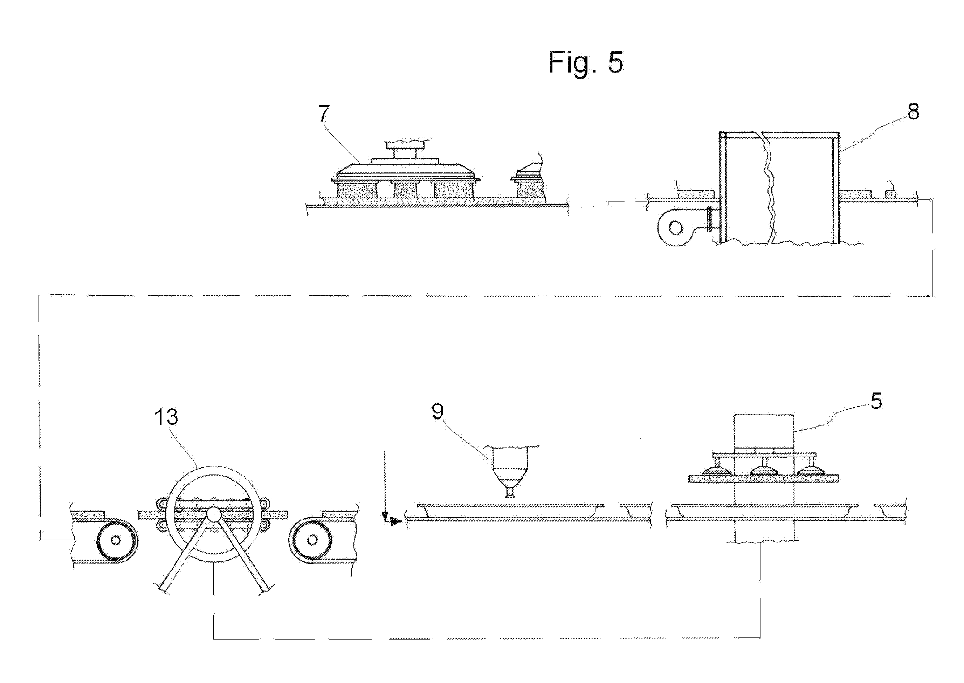

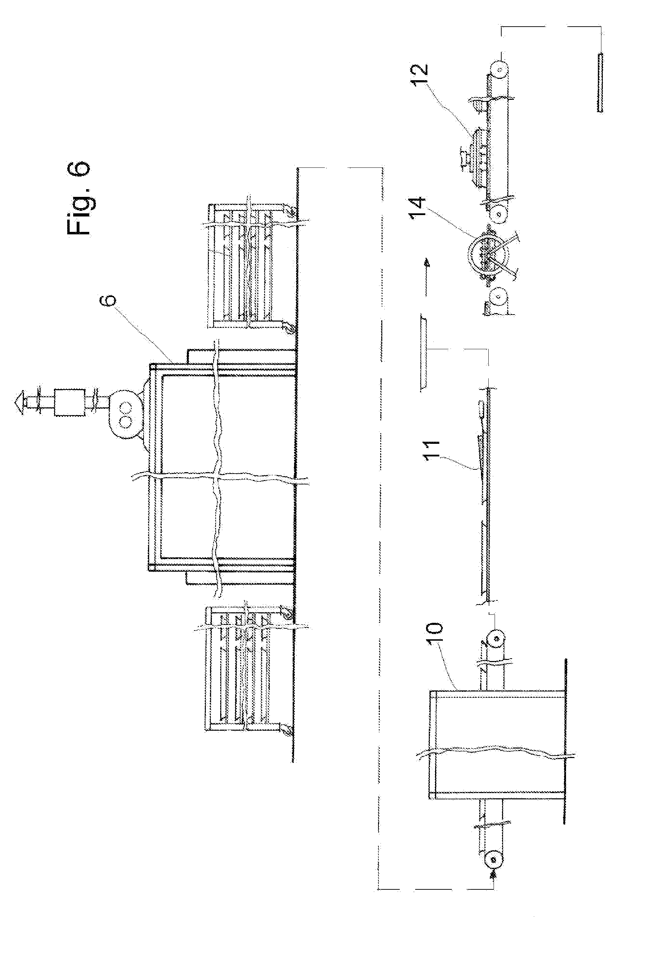

Figures 5 and 6 are side views of a plant for carrying out a process according to the present invention.

In the accompanying drawings, equivalent or similar parts or components have been marked with the same reference numerals.

A process according to the present invention therefore provides for bringing a slab of porous stony material, such as travertine, breccia, porous or locally "disjointed" pudding stone, tuffs (peperino from Lazio type) and biocalcarenites stone (Vicenza stone type), in contact with a hardenable fluid resinous material, like a polyester resin, for example liquid transparent, an epoxy resin or an acrylic resin and creating a predetermined pressure in the environment in which the slab is situated in contact with the resinous material, such that the resinous material is forced to penetrate into the pores of the slab, in a controlled manner at the noble surface of the slab more in contact with the resinous material.

Preferably according to the present invention, the predetermined pressure is less than the atmospheric pressure (vacuum environment), still more preferably between about 0.2 and about 0.9 bar and is applied for a time in the range of about 5 to about 90 seconds.

Still more preferably in the environment in which the slab or block is arranged, a pressure lower than atmospheric pressure is first created (vacuum environment), and then a pressure greater than the atmospheric pressure, or vice versa.

In both cases, the pressure which is different from the atmospheric pressure forces the resinous material to penetrate into the holes of the slab or block, hence the air will preferably be suctioned to create an environment with pressure lower than the atmospheric pressure (vacuum environment), starting from a distal zone from the noble surface to be resinated and close to the surface of the slab opposite thereto, and the air (or other fluid which does not react with the resinous material or with the slab but has only the object of increasing the pressure on the resinous material) will be supplied to create an environment with higher pressure than the atmospheric pressure starting from a zone close to the noble surface to be resinated and distal from the surface of the slab opposite thereto.

According to a specific embodiment, the stony material slab or block 1 can be arranged in a tub 2 or atop a support, of a suitable material such as plastic material or stainless steel, which is equipped with a bottom with raised portions or spacer means 3a, 3b. The bottom can be shaped so to have such raised portions 3a or the latter can be obtained by placing one or more raising elements, for example made of plastic material 3b, on top of the bottom thereof.

In order to carry out a process according to the present invention, one proceeds by placing the slab or block on top of the tub and then casting the resinous material into the perimeter space between the slab 1 and the tub 2, or casting the resinous material into the tub 2 before prearranging the slab or block 1 inside the latter. In such a case immersion of the slab in the resinous material would not be required, though an application of the resin by "sinking" would be necessary, thus with an immersion chiefly of the noble surface 1 a of the slab in the resinous material.

In both cases, it is important to suitably meter the resinous material such that the slab is not completely immersed therein, but immersed only up to a predetermined height, e. g. equal to about 3-10 mm. At this point, the noble surface 1 a of the slab 1, i.e. that turned towards the bottom of the recipient, will be completely in contact with the resinous material due in particular to the presence of the raised portions 3a, 3b at the bottom which ensure the presence of resinous material for the entire airspace between slab 1 and bottom of the tub 2.

Then the tub is prearranged inside an apparatus arranged to produce a vacuum, e. g. 0.2-0.9 bars, for a predetermined time, e. g. between 5 - 90 seconds, starting from the surface 1 b opposite the surface 1 a. In such a manner, the resinous material is caused to ascend into the pores of the slab or block, at the surface in contact with the bottom of the tub 2 through a predetermined height, and thus without affecting the entire thickness of the slab or block, but only the noble surface 1 a and the slab for a limited thickness. As stated above, in place of the vacuum an overpressure can be applied with respect to the atmospheric pressure, or this can be alternated with the provision of the vacuum.

The resined slab must at this point be removed from the tub 2, this being obtainable by means of detachment means prearranged on the tub before the insertion in the resin or by means of blade elements or chemical compounds immersed in the tub after the resin is polymerized in contact with the tub container.

Other steps can also possibly be carried out, such as:
- pre-dressing the noble surface of the slab which will come into contact with the bottom of the tub, e. g. by means of abrasive grindstones of 46, 60 or 120 grain size;
- heating the sheet in an oven up to about 30°-40°C for approximately one hour, in order to eliminate the moisture present in the slab pores before contact with the resin;
- heating the slab in a catalyst oven at a temperature from about 20 to about 30°C for a time range of 2 to 24 hours, after the application of the resin;
- finishing the slab, e. g. with a dressing, in such a manner eliminating the excess resin on the noble surface of the slab;
- filling any pores which have possibly remained open by means of UV polyester putty, cement or stucco; and
- polishing the slab noble surface.

One working cycle example according to the present invention provides for the following sequential steps:
- prearranging a stony material slab or block;
- pre-dressing the noble surface of the slab by means of abrasive grindstones of 46, 60 or 120 grain size;
- heating the slab thus covered in oven at approximately 30°-40°C for about one hour in order to eliminate the moisture present in the pores of the slab;
- prearranging a tub container equipped with raised portions at the bottom thereof;
- filling the tub container with about 5-7 millimeters of polyester resin (e. g. T8);
- arranging the slab or block in the tub container, with the noble surface of the slab or block in contact with the bottom of the container and sunk in the resin;
- arranging the container in a device suitable for creating a lower pressure than the atmospheric pressure (vacuum);
- lowering the pressure in the device, thus causing the resin to ascend the noble surface towards the inside of the slab or block;
- once again heating the slab in an oven to cause the resin to harden or polymerize;
- finishing the noble surface of the slab, e. g. by means of machine dressing in order to eliminate the excess resin from the noble surface of the slab and to obtain a uniform flat surface;
- filling any pores which have possibly remained open, e. g. by employing polyester putty which can be polymerized upon exposure to UV rays, cement or stucco; and
- polishing the noble surface of the slab or block.

According to the present invention, a plant 4 is also provided for carrying out the above process.

One such plant comprises a resining station 5 in which a porous, stony material slab or block is brought into contact with a resinous material, and a station 6 for the application of a predetermined pressure, greater or less than the atmospheric pressure, to the environment in which the slab or block with resinous material is arranged, so to cause a controlled, forced penetration of said at least one resinous material into the pores of said slab or block at at least said noble surface 1 a.

Preferably, the resining station comprises injection means 9 of resinous material in the tub or tubs.

Such plant can possibly comprise:
- a pre-working station 7 for the slab, e. g. a pre-dressing, then a preheating station 8, by means of which the moisture is eliminated from the slab;
- a station for feeding supports or tubs;
- a second heating station 10, preferably arranged downstream of the station for producing said predetermined pressure, in order to accelerate the hardening of the resinous material;
- an extraction station 11 for withdrawing the slab or block from the respective tub; and
- a post-working station 12 of the slab or block, e. g. for eliminating the excess resinous material on the slab.

If desired, rotary means 13-14 of any suitable type for rotating or overturning the slab or block can also be provided for in order to bring the pre-worked noble surface of the slab or block upward or downward, respectively, thereby bringing it to face the bottom of the tub or the machine tool in order to conduct any post-working operations.

Clearly, with a process according to the present invention, there is no need to apply a layer of cement or stucco at the surface opposite the noble surface. According to the prior art, such layer is required for stopping the resin which has been cast in the slab, as otherwise the resin would pass through the entire slab until it emerges on the side opposite that at which it was cast.

Moreover, the amount of resin required according to the present invention is much less than that used with a conventional process. In fact, it is not necessary to fill all the holes; it is sufficient to fill the holes for a limited height (thickness) of the slab. There is therefore a much lower consumption of resinous material.

In addition, the working times of the slab are considerably reduced. There is no need for additional applications of resinous material, as occurs in the prior art in order to fill the pores of the slab; instead a single resin application step is required which substitutes the three or four applications of the currently adopted processes.

The process for finishing stony material slabs or blocks described above is susceptible to numerous modifications and variants within the protective scope as defined by terms of the claims.

According to one variant, a plant according to the present invention can provide for a resinous material insertion station after the slab or block has been arranged on a respective tub, in a manner such to apply the resin at the edge of the tub, between tub and slab.

According to another variant, a station for generating vacuum and a station for generating an overpressure with respect to the atmospheric pressure can be provided either in sequence, or in reverse order.

## Claims

1. A process for finishing porous, stony material slabs or blocks, comprising the following sequential steps:
- prearranging a stony material slab or block (1) to be treated, having a noble surface (1a) and an opposite surface thereto (1 b);
- placing at least one hardenable fluid resinous coating material in contact with at least the noble surface (1 a) of said slab; and
**characterized in that** it comprises the steps of arranging said slab or block (1) in a controlled pressure environment, thereby creating a predetermined pressure at at least one of said noble (1 a) and opposite (1 b) surfaces of said slab or block (1) to cause a controlled, forced penetration of said at least one resinous material into the pores of said slab or block at at least said noble surface (1 a).

2. A process according to claim 1, **characterized in that** said predetermined pressure is maintained until partial hardening of said resinous material is attained near the resined surface (1 a) or surfaces.

3. A process according to claim 1, **characterized in that** said predetermined pressure is maintained until total hardening of said resinous material is attained near the resined surface (1 a) or surfaces.

4. A process according to any preceding claim, **characterized in that** said controlled pressure is less than the atmospheric pressure.

5. A process according to claim 4, **characterized in that** said controlled pressure is in the range from 0.2 to 0.9 bar.

6. A process according to any claim 1 to 4, **characterized in that** said controlled pressure is greater than atmospheric pressure.

7. A process according to any preceding claim, **characterized in that** said at least one step of generating a predetermined pressure comprises at least one step of generating a pressure lower than the atmospheric pressure and at least one step of generating a pressure higher than atmospheric pressure.

8. A process according to claim 7, **characterized in that** said pressure is a suction pressure obtained in said at least one step of generating a pressure lower than atmospheric pressure at said opposite surface (1 b) and said pressure is an applied pressure in said step of generating a pressure greater than the atmospheric pressure at said noble surface (1 a).

9. A process according to any preceding claim, **characterized in that** said slab or block is arranged in a tub container (2) intended to contain said resinous material with its noble surface (1 a) turned towards the bottom of said container.

10. A process according to any preceding claim, **characterized in that** said slab or block is placed in contact with said at least one resinous material by immersion.

11. A process according to any preceding claim, **characterized in that** it proves for spacer means (3a, 3b) between the bottom of said tub container (2) and said slab or block (1), whereby between said bottom and said slab (1) an air space is delimited which can be filled with said resinous material.

12. A process according to claim 11, **characterized in that** said spacer means comprises at least one relief portion (3a) at the bottom of said tub container.

13. A process according to any preceding claim, **characterized in that** said at least one resinous material is chosen from the group comprising polyester resins, epoxy resins and acrylic resins.

14. A process according to any preceding claim, **characterized in that** it comprises a step of separating said resinous material from the bottom of said tub container once it is at least partly polymerized.

15. A process according to claim 14, **characterized in that** said separation step is carried out by applying detachment means on the bottom of said tub container.

16. A process according to any preceding claim, **characterized in that** it comprises a step of pre-dressing said slab by means of abrasive grindstones of 46, 60 or 120 grain size.

17. A process according to any preceding claim, **characterized in that** it comprises a step of heating said slab or block in an oven up to approximately 30°-40°C for a time interval ranging from 20 minutes to 3 hours, in order to eliminate the moisture present in the pores of said slab, before being put in contact with said at least one resinous material.

18. A process according to any preceding claim, **characterized in that** it comprises at least one step of heating said slab or block in a catalyst oven at a temperature of about 20-30°C for a time interval ranging from 2 to 24 hours, after having been put in contact with said at least one resinous material.

19. A process according to any preceding claim, **characterized in that** it comprises a step of finishing said slab or block to eliminate any formations of said resinous material on said noble surface (1 a) of said slab (1).

20. A process according to any preceding claims, **characterized in that** it comprises at least one step of filling any pores of said slab or block, which have possibly remained open.

21. A process according to any preceding claim, **characterized in that** it comprises a step of polishing said slab or block.

22. A plant for carrying out a process according to any claim 1 to 21, **characterized in that** it comprises at least one resining station (5), at which at least one stony porous work piece surface is placed in contact with a resinous material, and at least one controlled-pressure station (6) for the application of a predetermined pressure at at least one surface of said work piece, thereby causing a controlled, forced penetration of said at least one resinous material into the pores of said stony porous workpiece at at least said noble surface (1 a) thereof.

23. A plant according to claim 22, **characterized in that** said at least one controlled-pressure station comprises at least one station for generating a pressure lower than atmospheric pressure.

24. A plant according to claim 22 or 23, **characterized in that** said at least one controlled-pressure station comprises at least one station for applying a pressure greater than atmospheric pressure.

25. A plant according to any claim 22 to 24, **characterized in that** it comprises at least one pre-working station (7) of said slab.

26. A plant according to any claim 22 to 25, **characterized in that** it comprises feeding means for at least one tub container for said slab or block.

27. A plant according to any claim 22 to 26, **characterized in that** said resining station comprises injection means (9) for injecting resinous material into at least one tub container.

28. A plant according to any claim 22 to 27, **characterized in that** it comprises at least one heating station (8, 10) arranged to eliminate the moisture from said work piece (1) and/or to accelerate the hardening of said resinous material.

29. A plant according to any claim 22 to 28, **characterized in that** it comprises an extraction station (11) for withdrawing said work piece from a respective tub container (2).

30. A plant according to any claim 22 to 29, **characterized in that** it comprises a post-working station (12) of said slab or block.
